# EUROPÄISCHE PATENTSCHRIFT

(11) **EP 2 942 148 B1**
(45) Veröffentlichungstag und Bekanntmachung des Hinweises auf die Patenterteilung: **22.03.2017**
(21) Anmeldenummer: 15165384.7
(22) Anmeldetag: 28.04.2015
(51) Int. Cl.: B23P 23/04, B23C 3/04, B23Q 39/02, B23K 7/00, B23K 10/00

(54) **VORRICHTUNG UND VERFAHREN ZUM SCHNEIDEN VON KUNSTSTOFFMANTELROHREN**
DEVICE AND METHOD FOR CUTTING STEEL PIPES WITH PLASTIC SHEATH
DISPOSITIF ET PROCÉDÉ DE DÉCOUPE DE TAYAUX EN ACIER REVÊTU DE MATIÈRE PLASTIQUE

(30) Priorität: 05.05.2014 DE 102014006383; 10.11.2014 DE 102014116347
(43) Veröffentlichungstag der Anmeldung: 11.11.2015
(73) Patentinhaber: FW-Fernwärme-Technik GmbH, 29227 Celle (DE)
(72) Erfinder: Grube, Manfred, 29356 Bröckel (DE); Harders, Volkwart, 30938 Burgwedel-Engensen (DE)
(74) Vertreter: Einsel, Martin

(56) Entgegenhaltungen:
- EP-A1- 0 634 247
- WO-A1-2013/186732
- US-A- 4 213 357
- US-A- 4 441 695
- DATABASE WPI Week 201280 Thomson Scientific, London, GB; AN 2012-P95576 XP002745197, -& CN 102 626 818 A (CHANGSHU XUANLI BEARING STEEL TUBES CO) 8. August 2012 (2012-08-08)
- DATABASE WPI Week 201159 Thomson Scientific, London, GB; AN 2011-G80172 XP002745203, -& KR 2011 0044517 A (INITECH MACHINERY CO LTD) 29. April 2011 (2011-04-29)

## Beschreibung

Die Erfindung betrifft eine Vorrichtung zum Schneiden von Kunststoffmantelrohren, welche ein inneres Stahlrohr, eine das Stahlrohr umgebende Schaumisolierung und ein die Schaumisolierung umgebendes Kunststoff-Außenrohr aufweisen. Sie betrifft ferner ein Verfahren zum Schneiden von Kunststoffmantelrohren welche ein inneres Stahlrohr, eine das Stahlrohr umgebende Schaumisolierung und ein die Schaumisolierung umgebendes Kunststoff-Außenrohr aufweisen. Die US 4,441,695 offenbart eine Vorrichtung mit den Merkmalen des Oberbegriffs des unabhängigen Anspruchs 1, während die US 4,213,357 ein Verfahren mit den Merkmalen des Oberbegriffs des unabhängigen Anspruchs 11 offenbart.

Kunststoffmantelrohre werden insbesondere für Fernwärmeleitungen benötigt. Sie sind weltweit führend als wirtschaftliches System für den unterirdischen Transport von Fernwärmewasser bei Dauertemperaturen bis 120 °C. Die entsprechenden Fernwärmeleitungen sind über lange Strecken zu verlegen, so dass ein großer Teil der Kunststoffmantelrohre in vorbestimmten Längen gefertigt und zum Verlegen an den jeweiligen Einsatzort transportiert werden kann.

Kunststoffmantelrohre bestehen üblicherweise aus einem meist geschweißten, medienführenden Stahlrohr, einer um das Stahlrohr liegenden Polyurethan-Schaumisolierung und einem äußeren Polyethylen-Mantelrohr. Es gibt sie in Stahlrohrnennweiten zwischen 25 mm und 1.200 mm. Derartige Kunststoffmantelrohre werden in vorgegebenen Rohrlängen bis zu 16 Metern Länge und mit allen erforderlichen Formstücken, etwa für Biegungen und Abzweigungen, werkseitig vorgefertigt. Die gängigsten Rohrlängen sind in der Praxis 6 m, 12 m und 16 m.

Wird ein Fernwärmenetz gebaut, bestehend aus Vor- und Rücklaufleitung, sowie einem Formstückprogramm aus ebenfalls vorgefertigten Teilen, so kann der Planer/Verleger in Verbindung mit dem Trassenplan die Anzahl der Baustellenverbindungen/Muffen festlegen und mitbestellen.

Passlängen werden auf der Baustelle zurechtgeschnitten, nachdem im Zuge der Verlegung die Restlängen eingemessen werden.

Allerdings sind üblicherweise auch äußere Randbedingungen vorhanden, die ein Verlegen der Fernwärmeleitungen um Hindernisse herum erfordern. Die Endstücke vor Anschlüssen benötigen ohnehin eine andere Länge als die genormte Länge. Auch das Vorsehen von Abzweigungen und Zuführungen führt dazu, dass mit der Vorfertigung einer bestimmten Länge oder auch mehrerer vorherbestimmter Längen nicht sämtliche Anforderungen erfüllt werden können.

In all diesen Fällen ist es erforderlich, Einzelstücke einer ganz bestimmten, speziellen Länge anzufertigen, wobei dieses Längenstück dann auch wieder mit in der Lage sein muss, mit den nach dem Verlegen benachbarter Kunststoffmantelrohren für die gleiche Fernwärmeleitung wieder verbunden zu werden.

Dabei ist es im Regelfall nicht möglich, derartige Einzelstücke in der Fertigung separat herzustellen oder aus bestehenden Kunststoffmantelrohren zu kürzen und danach erst an die Baustelle zu liefern. Häufig ist es nämlich so, dass die Fernwärmeleitungen im laufenden Betrieb aufgrund aufgetretener Fehler ersetzt werden müssen und Wartezeiten von mehreren Tagen oder gar Wochen dann äußerst unerwünscht oder auch unvertretbar sind. Mit Fernwärme beheizte Wohnungen wären aufgrund des aufgetretenen Fehlers dann nämlich für Tage oder Wochen unbewohnbar und würden außerdem aufgrund etwaiger Minustemperaturen Schaden nehmen.

Das gleiche Problem stellt sich auch regelmäßig, wenn sich während der Baumaßnahmen ergibt, dass eine bestimmte Länge eines Kunststoffmantelrohrs benötigt wird. Auch hier sind Verzögerungen durch eine Fertigung im Werk und anschließender Transport an die Baustelle nicht vertretbar. Da die Fernwärmeleitungen üblicherweise als erstes in der Erde verlegt werden müssen, bevor anschließend etwa eine Grünanlage oder Aufbauten darüber gesetzt werden können, könnte ein fehlendes Stück Kunststoffmantelrohr den Bau einer kompletten Wohnhaussiedlung blockieren. Jede Verzögerung bei der Fertigstellung der Fernwärmeleitung führt zu einer Verzögerung der gesamten weiteren Bauarbeiten und ist daher besonders unerwünscht.

Es kommt also in der Praxis nur eine Fertigung von Einzelstücken direkt an der Baustelle in Betracht. Wenn versucht wird, an Ort und Stelle der Bauarbeiten entsprechende Einzelstücke aus bestehenden Kunststoffmantelrohren durch Kürzung anzufertigen, so führt dies zu einer erheblichen Fehlerquelle, da nun bei häufig ungünstigen Witterungsbedingungen mit Augenmaß und an der Baustelle vorhandenen Werkzeugen versucht werden muss, eine bestimmte Länge des Kunststoffmantelrohres möglichst genau zu bestimmen und von einem vorhandenen längeren Stück abzuschneiden.

Wird im Stand der Technik ein Kunststoffmantelrohr vor Ort auf der Baustelle auf Länge geschnitten, so wird zunächst das Längenmaß anhand des aktuellen Bauplans festgestellt. Anschließend wird das meist schwarze Mantelrohr aus Polyethylen mit einem Strich markiert, üblicherweise mit einem weißen Strich. Anschließend wird mit einem Winkelschleifer oder einem Trennschleifer größerer Bauart das Polyethylen-Mantelrohr sowie die Polyurethan-Schaumisolierung (PUR-Schaum) bis auf das medienführende Stahlrohr durchgeschnitten. Der stehen gebliebene Rest der Polyurethan-Schaumisolierung muss dann sehr aufwändig, zeitraubend und auch wenig präzise mittels Hammer, Meißel, Stechbeitel und weiteren Werkzeugen von dem Stahlrohr abgetrennt werden. Das Stahlrohr muss zudem saubergebürstet werden.

Ist diese Entfernung der Polyurethan-Schaumisolierung von dem Stahlrohr erfolgt, wird danach dann herkömmlich der Innenrohrschnitt markiert. Es erfolgt dann das Trennen oder Schneiden des inneren Stahlrohrs. Dieses erfolgt ebenfalls mittels eines Winkelschleifers oder Trennschleifers freihändig. Der Schnitt ist daher ebenfalls sehr unpräzise und üblicherweise auch unsauber und sehr schlecht für die danach vorzunehmenden Schweißarbeiten vorbereitet. Der Zeitaufwand ist darüberhinaus erheblich.

Diese Probleme führen dazu, dass einerseits die durchzuführenden Arbeiten sehr aufwändig sind und dass andererseits die damit erzielten Vorarbeiten für eine erneute Verbindung der getrennten Passagen mit einem anderen Kunststoffmantelrohr zu unbefriedigenden Ergebnissen führen. Das bedeutet, dass gerade im Bereich der auf diese Weise erstellten Verbindungen zwischen Kunststoffmantelrohrabschnitten innerhalb von Fernwärmeleitungen eine erhöhte Schadenshäufung oder das Risiko für eine solche Schadensentstehung besteht. Bei Betrachtung von Schadensstatistiken der AGFW ist im Bereich der Baustellenverbindungen eine Häufung festzustellen.

Aufgabe der Erfindung ist es daher, eine neue Vorrichtung und / oder ein neues Verfahren vorzuschlagen, mit dem eine einfachere oder bessere Möglichkeit zum Schneiden von Kunststoffmantelrohren für Fernwärmeleitungen möglich wird.

Diese Aufgabe wird durch eine Vorrichtung mit den Merkmalen des unabhängigen Anspruchs 1 sowie durch ein Verfahren mit den Merkmalen des unabhängigen Anspruchs 11 gelöst.

Die erfindungsgemäße Vorrichtung kann beliebig auf Baustellen aufgestellt werden, um dort alle individuell anfallenden Einzelstücke und Speziallängen an Kunststoffmantelrohren anzufertigen und gegebenenfalls auch weitere individuell anfallenden Schneidarbeiten auszuführen.

Dabei ist die erfindungsgemäße Vorrichtung ungefähr 16 m lang, um auch die längstmöglichen Kunststoffmantelrohre aufnehmen zu können. Die Vorrichtung nimmt also vergleichsweise wenig Platz in Anspruch, da sie senkrecht zur Längsrichtung nur vergleichsweise wenig erstreckt ist. Auch das ist gerade im Baustellenbereich von Vorteil.

Mittels der Erfindung wird eine qualitativ weit höherwertige Verbindungsvorbereitung ermöglicht, als dies im Stand der Technik vorgesehen war. Die Qualität ist besser sowohl hinsichtlich der hinterher herstellbaren Schweißnaht der Innenrohre als auch hinsichtlich der für die Muffe im Bereich der Schaumstoffisolierung zur Verfügung stehenden Anschlussmöglichkeiten.

Es wird mit der Erfindung möglich, für das Schneiden von Kunststoffmantelrohren aller Durchmesser auf Baustellen eine qualitative Verbesserung und deutliche Rationalisierung zu erreichen.

Ein weiterer Vorteil liegt in der wesentlich schnelleren Abisolierung im Vergleich zum Stand der Technik. Für das Trennen eines Kunststoffmantelrohres beispielsweise der Größe 300/450 werden etwa zwei Minuten Zeit für das Abisolieren und nochmals zwei Minuten für den anschließenden Plasmabrennschritt des aus Stahl bestehenden Innenrohres benötigt. Diese sehr kurze Zeit ist möglich bei einer gleichzeitig sehr schnellen und sauberen Trennung des Kunststoffmantelrohres und einer präzisen Schweißnahtvorbereitung des Innenrohres.

Auch ein weiterer Aspekt wird durch die Erfindung gelöst. So sind in Kunststoffmantelrohren in vielen Fällen so genannte Meldeadern eingeschäumt. Solche beispielsweise aus der EP 1 047 926 B1 bekannten Sensorleitungen bestehen häufig aus Chrom-Nickel-Drähten bzw. aus Kupferdrähten. Sie werden in dem Polyurethan-Schaum mit eingeschäumt, und zwar üblicherweise in einem Bereich von etwa 1 cm unterhalb des äußeren Polyethylen-Mantels direkt im Schaum. Ihr Zweck ist es, etwa bei einer Durchfeuchtung des Polyurethan-Schaums beispielsweise aufgrund einer undichten Schweißnaht oder einer schlecht geschäumten Muffe dem Betreiber der Fernwärmeleitung möglichst rasch einen Fehler anzuzeigen. Hierfür gibt es verschiedene Messverfahren.

Bei dem Abisolieren des Kunststoff-Außenrohrs (also insbesondere des Polyurethanmantels) und der Schaumisolierung (insbesondere Polyurethanisolierung) werden mit den eingesetzten Werkzeugen die vorerwähnten Meldeadern mit durchgeschnitten. Das dadurch verlorengehende und zwischen den noch vorhandenen Meldeadern befindliche Stück Meldeader wird mittels Klemmverbinder und/oder Löten und anschließendem Aufschrumpfen mit einem kleinen Schrumpfschlauch wieder ersetzt. Dabei wird stirnseitig aus dem verbleibenden Kunststoffmantelrohr ein circa 3 cm langer Stopfen aus der Schaumisolierung, also ein ein 3 cm langer PUR-Stopfen, mittels eines sogenannten Apfelstechers entfernt, so dass die zentrisch liegende Meldeader angeschlossen werden kann.

Dabei können die Meldeadern auch durch vorkonfektionierte im Baustellenverbindungsbereich ersetzt werden, wenn die Innenrohrschweißarbeiten beendet sind -einschließlich Prüfen der Naht- und bevor die Mantelrohrmuffe verschlossen wird.

Die Konzeption arbeitet insgesamt so, dass unmittelbar an der Baustelle ein zu bearbeitendes, also zu trennendes Kunststoffmantelrohr auf eine Unterstützungsvorrichtung gelegt und auf dieser drehbar angeordnet wird.

Die Unterstützungsvorrichtung, also letztlich die Unterlage für das zu bearbeitende Kunststoffmantelrohr, besteht aus mehreren miteinander während der Bearbeitung zusammenhängenden Teilen.
Auf dieser Unterstützungsvorrichtung befinden sich in Längsrichtung bzw. parallel zur Rohrachse verfahrbare Rollenböcke. Auf diese Rollenböcke wird dann das Rohr um seine horizontale Achse drehbar aufgelegt.

Hierzu ist bevorzugt die Unterstützungsvorrichtung mit Laufschienen, einer Rollenführung und den Rollenböcken ausgestattet.

Das Rohr wird bei den folgenden Schritten jeweils um seine Achse gedreht.

Auf den Schienen läuft eine Bearbeitungseinheit. Neben den unmittelbar auf den Schienen laufenden Rädern oder Rollen oder Kufen weist diese Bearbeitungseinheit eine Art Gerüst auf, welches das zu schneidende Kunststoffmantelrohr überspannt. In dem Gerüst sind ein oder mehrere Werkzeuge angebracht, insbesondere zumindest ein materialabtragendes Werkzeug. Dieses ist insbesondere ein Fräser.

Diese Bearbeitungseinheit wird auf den Schienen in die Bearbeitungsposition verfahren, die für den einzubringenden Schnitt zuvor durch Längenmessung bestimmt worden ist. Dazu werden die Kunststoffmantelrohre mit dem einen Ende auf eine vorgegebene Nullposition aufgelegt. Mit einem Entfernungsmesser an der Bearbeitungseinheit wird diese in Position gebracht und somit die gewünschte Länge des abzuschneidenden Kunststoffmantelrohr-Einzelstücks eingestellt.

In dieser Position wird die Bearbeitungseinheit fixiert und das Kunststoffmantelrohr vorzugsweise gegen Abheben gesichert.

Das materialabtragende Werkzeug, insbesondere also der eingebaute Fräser, fährt nun von oben oder von der Seite in den Polyethylenmantel und schneidet diesen mitsamt dem darunterliegenden Polyurethanschaum der Schaumisolierung bis auf eine vorbestimmte Höhe. Dabei wird das Kunststoffmantelrohr durch die angetriebenen Rollenböcke in eine drehende Bewegung versetzt. Das Kunststoff-Außenrohr und die Schaumisolierung werden auf dem gesamten Umfang abgefräst, was durch die drehende Bewegung automatisch herbeigeführt wird.

Bevorzugt erfolgt dann noch eine axiale Verschiebung des materialabtragenden Werkzeugs, um den gleichen Arbeitsgang, jedoch um 150 mm in Längsrichtung versetzt, zu wiederholen.

Diese Wiederholung hat zur Folge, dass ein Zwischenraum zwischen den stehenbleibenden Bereichen der Schaumisolierung und des Kunststoff-Außenrohrs geschaffen wird, der beispielsweise 300 mm oder 420 mm breit sein soll. Gegebenenfalls ist noch ein zweites Verschieben des Fräsers erforderlich.

Dieser Zwischenraum ist gewünscht, um eine weitere Bearbeitung des inneren Stahlrohrs, insbesondere ein späteres Zusammenschweißen mit einem Gegenstück, zu ermöglichen. Es entsteht auf diese Weise eine Art Muffenende.

Zwischen dem materialabtragenden Werkzeug einerseits und dem inneren Stahlrohr des Kunststoffmantelrohrs andererseits bleiben noch etwa 10 mm oder 15 mm Schaumisolierung stehen, um zu verhindern, dass das materialabtragende Werkzeug in das Stahlrohr fährt und dieses beschädigt.

Im nächsten Arbeitsgang wird ein weiteres materialabtragendes Werkzeug eingesetzt, bevorzugt eine rotierende Stahldrahtbürste. Diese entfernt die noch verbliebenen 10 mm bis 15 mm Schaumisolierung des Polyurethanschaums und reinigt das Innenrohr auf seiner Außenseite metallisch blank.

Diese Stahldrahtbürste ist vorzugsweise in der gleichen Bearbeitungseinheit angeordnet.

Ebenfalls in der gleichen oder aber auch in einer weiteren Bearbeitungseinheit sind dann bevorzugt zwei Plasmabrenner als Stahltrenneinrichtung vorgesehen. Diese beiden Plasmabrenner sind vorzugsweise auf 30° Fasenwinkel eingestellt, um das Stahlrohr zu trennen und zeitgleich auf beiden Seiten Fasen zu schneiden. Die Schnitte erfolgen rechtwinklig zur Rohrachse.

Alle vorgenannten Arbeitsabläufe der Bearbeitungseinheit und der zugeordneten weiteren Elemente, etwa der angetriebenen Rollenböcke, können vorzugsweise programmiert und automatisch erfolgen.

Das nunmehr getrennte Kunststoffmantelrohr kann dann manuell oder gegebenenfalls auch motorisch auf der Rollenbahn auseinandergeschoben werden. Da auf jeder Seite ein Rollenantrieb vorhanden ist, kann bei einer höheren Umdrehungszahl das Abschleifen der Aufwertung der geschnittenen Fasen erfolgen.

Für das Trennen kann man bevorzugt bei kleineren Rohren bis etwa 300 oder 600 mm Durchmesser einen Plasmabrenner einsetzen, während bei Rohren mit einem größeren Durchmesser von beispielsweise bis zu etwa 1.400 mm Durchmesser mit einem Brenner gearbeitet wird, der mittels Acetylen und Sauerstoff arbeitet.

Vorgesehen wird außerdem noch eine Abhebesicherung für das Rohr. Die erheblichen Kräfte, die arbeiten, während das Rohr sich um eine horizontale Achse dreht, könnten anderenfalls zu einer Tendenz führen, das Rohr insgesamt von der Unterstützungsvorrichtung abzuheben.

Als Abhebesicherung für das Rohr kann bevorzugt eine Rollenkette vorgesehen werden. Diese Rollenkette weist dabei eine Reihe von kleinen Stahlrohren auf, deren Längsachse parallel zur Achse des Rohres angeordnet ist. Die Rollenkette wird auf beiden Seiten des Kunststoffmantelrohrs an der Bearbeitungseinheit oder auch im Bereich der Schienen befestigt und so fest angezogen, dass die kleinen Rollen auf der Außenhaut des Kunststoffmantelrohrs aufliegen, abseits von dem unmittelbaren Bearbeitungsbereich. Durch diese Art der Abhebesicherung kann nicht nur das Abheben selbst, sondern auch eine Neigung zum Drehen der Kunststoffmantelrohre um ihre eigene Achse unterbunden bzw. reduziert werden, die durch die seitens der Fräsen und weiteren Bearbeitungselemente auf das Kunststoffmantelrohr ausgeübt werden.

Die zum Materialabtrag vorgesehenen Werkzeuge der Bearbeitungseinheit können von vornherein zusätzlich mit einer Späneabzugsmöglichkeit beziehungsweise Späneabsaugungsmöglichkeit ausgestattet werden, die dann mit der Bearbeitungseinheit in Längsrichtung der Schieneneinrichtung verfahrbar ist.

Ebenso ist es bevorzugt möglich, einen Arbeitsplatz in überdachter Form an der Bearbeitungseinheit oder einer weiteren Bearbeitungseinheit aufzubauen, der ebenfalls verfahrbar ist und eine Beobachtung der im Wesentlichen interessierenden Bearbeitungsschritte ermöglicht, zugleich auch eine Steuerung der entsprechenden Maßnahmen. Dies erleichtert die Bearbeitung der Kunststoffmantelrohre bei ungünstiger Witterung erheblich.

Alle Längenmessungen werden bevorzugt digital vorgenommen. Dabei kann eine Lasermessung zweckmäßig integriert werden.

Insgesamt entsteht eine aus Stahl aufbaubare Gesamtkonstruktion, die sowohl baustellengerecht wie auch transportabel ist.

Der Aufbau der Unterstützungsvorrichtung aus mehreren einzelnen Modulen ermöglicht es, die gesamte Anlage mittels Lastkraftwagen bzw. Lastwagenanhängern von einer Baustelle zur nächsten zu transportieren. In Tests hat es sich als optimal herausgestellt, dabei 4 voneinander getrennte Abschnitte als Modul vorzusehen, die jeweils als Block von 4 Metern Länge aufgebaut sind. Die erfindungsgemäße Vorrichtung ist für einen breiten Bereich von Kunststoffmantelrohren geeignet. Da die Durchmesser beziehungsweise die Stahlrohrnennweiten über mehrere Größenordnungen erstreckt sind, hat sich bei Tests als bevorzugt herausgestellt, drei unterschiedliche Maschinengrößen vorzusehen. Besonders häufig fallen Kunststoffmantelrohre zur Bearbeitung an, die eine Nennweite zwischen 25 und 350 besitzen, das entspricht einem Mantelrohrdurchmesser zwischen 90 mm und 560 mm. Diese Kunststoffmantelrohre können alle mit ein und derselben erfindungsgemäßen Vorrichtung bearbeitet werden, die damit den größten Teil des in der Praxis auftretenden Spektrums abdeckt.

Darüber hinaus ist auch zu berücksichtigen, dass zwar im Vorhinein nicht genau abzusehen ist, wie lang die abzuschneidenden Rohre sein werden, weshalb ja auch eine Vorfertigung nicht möglich ist. Dagegen ist es durchaus bekannt, welchen Durchmesser beziehungsweise welche Nennweiten bei einem bestimmten Planungskonzept auftreten können, so dass die zweckmäßigste oder geeignetste Vorrichtung rechtzeitig vorab zur Baustelle geschickt werden kann, bevor noch die möglicherweise herzustellenden Kunststoffmantelrohrschnitte ermittelt oder auch nur in Erwägung gezogen worden sind.

Eine zweite Vorrichtung wäre dann etwa für Kunststoffmantelrohre mit Stahlrohrnennweiten zwischen 350 mm und 600 mm geeignet, eine dritte Vorrichtung für solche mit Nennweiten zwischen 650 mm und 1.200 mm. Von diesen beiden Typen erfindungsgemäßer Vorrichtungen werden allerdings voraussichtlich nur geringere Stückzahlen benötigt, da sie seltener zum Einsatz kommen werden.

Weitere bevorzugte Merkmale der Erfindung sind in den Unteransprüchen und in der folgenden Beschreibung von Figuren bevorzugter Ausführungsformen erwähnt.

Im Folgenden wird die Erfindung anhand der Zeichnung näher erläutert. Es zeigen:
- **Figur 1**: eine schematische Ansicht des Grobaufbaus einer erfindungsgemäßen Vorrichtung in Draufsicht, Seitenansicht sowie zwei Endansichten;
- **Figur 2**: einen detaillierteren Schnitt durch die erfindungsgemäße Vorrichtung in einer ersten Position;
- **Figur 3**: einen detaillierteren Schnitt durch die erfindungsgemäße Vorrichtung in einer zweiten Position; und
- **Figur 4**: einen Schnitt durch eine um 90° gedrehte Situation in einer dritten Position.

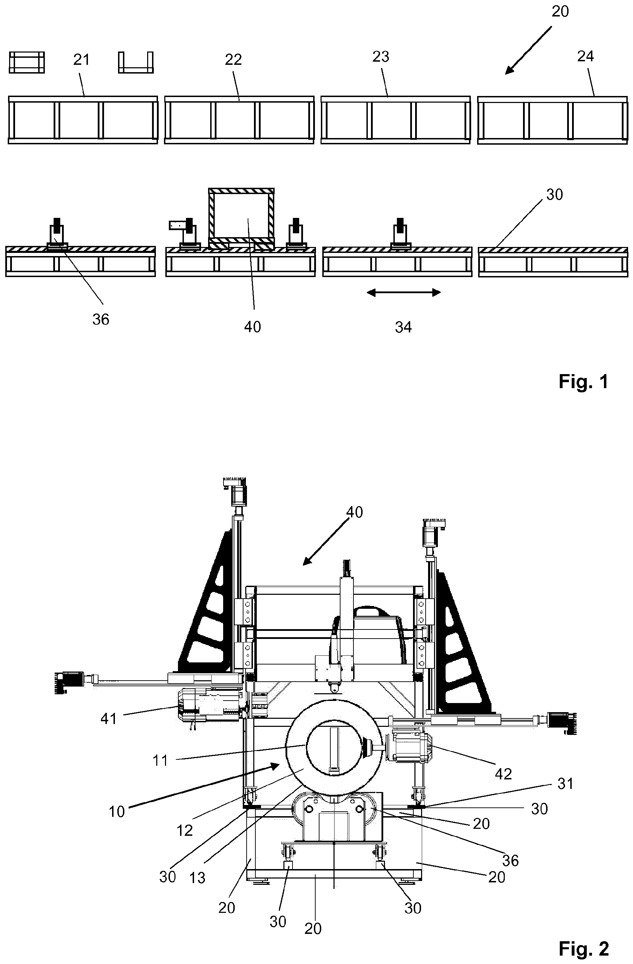

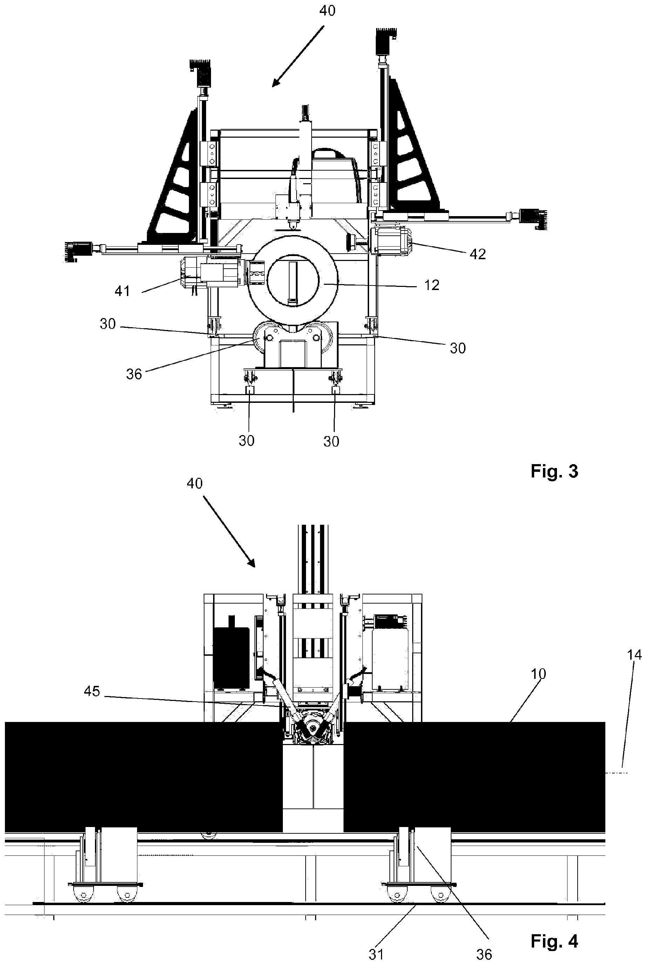

Ein Kunststoffmantelrohr 10 ist in den Figuren in mehreren Positionen gezeigt, unter anderem in den Figuren 2 und 3 im Schnitt und in der Figur 4 von der Seite.

Es besteht aus einem Stahlrohr 11, welches einen Hohlraum umgibt, der später die Führung des Mediums übernimmt, welches in erster Linie zu transportierendes Fernwärmewasser in unterirdischen Leitungen ist.

Das Stahlrohr 11 ist umgeben von einer Schaumstoffisolierung 12, die insbesondere aus Polyurethanschaum besteht. Die Isolierung ist vor allem als thermische Isolierung wichtig, da Fernwärmewasser selbstverständlich von dem umgebenden Erdreich thermisch isoliert werden muss.

Die Schaumisolierung 12 ihrerseits ist auf der Außenseite durch ein Kunststoff-Außenrohr 13 umgeben. Das Kunststoff-Außenrohr 13 besteht insbesondere aus Polyethylen und stellt eine mechanische und Feuchtigkeitsisolierung für die Schaumisolierung 12 nach außen dar.

Das Kunststoffmantelrohr 10 ist kreisförmig und die einzelnen Schichten konzentrisch. Folglich hat das Kunststoffmantelrohr 10 eine Längsachse 14, die in der Figur 4 zu erkennen ist.

Die erfindungsgemäße Vorrichtung soll es nun ermöglichen, die nur in bestimmten vorgefertigten Längen von beispielsweise 6 m, 12 m und 16 m existierenden einzelnen Kunststoffmantelrohre vor Ort, also insbesondere an der Baustelle, in die konkret gerade benötigten Längen zu schneiden. Dies ist an Baustellen bisher ein kritischer Punkt.

Die erfindungsgemäße Vorrichtung nutzt hierfür insbesondere eine in der **Figur 1** dargestellte Unterstützungseinrichtung 20. Diese Unterstützungseinrichtung 20 sieht man ganz oben in der Figur 1 von den beiden Endpositionen aus, darunter in einer Darstellung gesehen von oben und darunter wiederum gesehen von der Seite.

Die Unterstützungseinrichtung ist also kastenförmig und besteht bevorzugt und in der dargestellten Ausführungsform aus vier je 4 m langen Unterbauten, die an der Baustelle dann auf einer ebenen Fläche zusammengesetzt werden. In der Figur 1 sieht man diese Unterbauten 21, 22, 23 und 24 noch schematisch hintereinandergestellt.

In der unteren Darstellung der Figur 1 kann man sehen, dass diese Unterbauten 21, 22, 23 und 24 der Unterstützungseinrichtung 20 oben mit einer Schieneneinrichtung 30 ausgestattet sind. Die Schieneneinrichtung 30 weist eine Reihe von Schienen 31 auf und besitzt eine Längsrichtung 34.

Auf der Schieneneinrichtung 30 sind mehrere verfahrbare Rollenböcke 36 angeordnet. Die Rollenböcke 36 weisen Rollen auf, deren Rollenachse parallel zur Längsrichtung 34 ist. Die Rollenböcke 36 selbst können auch in Längsrichtung 34 auf den Schienen 31 der Schieneneinrichtung 30 hin- und hergefahren werden.

Außerdem gibt es eine noch im Folgenden weiter erörterte Bearbeitungseinheit 40, die ebenfalls auf den Schienen 31 der Schieneneinrichtung 30 über die Unterstützungseinrichtung 20 in Längsrichtung 34 verfahrbar ist.

In der Figur 1 nicht dargestellt ist zu Verdeutlichungszwecken das Kunststoffmantelrohr 10. Für den Schneidvorgang wird das Kunststoffmantelrohr 10 nun auf die Rollenböcke 36 auf der Schieneneinrichtung 30 der Unterstützungseinrichtung 20 gelegt. Die Längsachse 14 und die Längsrichtung 34 sind dann parallel zueinander.

Das Kunststoffmantelrohr 10 wird außerdem von dem Gerüst der Bearbeitungseinheit 40 überspannt; dieses Gerüst bildet quasi eine Brücke senkrecht zur Bildebene in der Figur 1 über das Kunststoffmantelrohr 10 hinweg.

In der **Figur 2** sieht man nun detaillierter die Bearbeitungseinheit 40, welche das Kunststoffmantelrohr 10 überspannt, das auf den Rollenböcken 36 liegt. Man sieht auch, dass die Schieneneinrichtung 30 aus mehreren Schienen besteht, dass also die Bearbeitungseinheit 40 und die Rollenböcke 36 nicht notwendig auf den gleichen Schienen 31 der Schieneneinrichtung 30 verfahrbar sein müssen.

Im Gegenteil, sie sind bevorzugt auf verschiedenen, natürlich parallel verlaufenden Schienen 31 der Schieneneinrichtung 30 angeordnet und laufen auf diesen.

Die Längsrichtung 34 ebenso wie die Längsachse 14 des Kunststoffmantelrohrs 10 stehen jeweils senkrecht auf der Bildebene in der Figur 2. Man sieht auch, dass die Bearbeitungseinheit 40 mit einem materialabtragenden Werkzeug 41 und einem zweiten materialabtragenden Werkzeug 42 ausgerüstet ist. Das materialabtragende Werkzeug 41 ist in der dargestellten Ausführungsform ein Fräser, das materialabtragende Werkzeug 42 eine rotierende Drahtbürste. Beide materialabtragende Werkzeuge 41, 42 und können an sich auch an verschiedenen Bearbeitungseinheiten 40 angebracht sein, bevorzugt sind sie jedoch wie dargestellt an einer Bearbeitungseinheit 40 angebracht.

Wie man nun in der **Figur 3** sieht ist dort das erste materialabtragende Werkzeug 41, nämlich der Fräser, innerhalb der Bearbeitungseinheit 40 von oben nach unten soweit heruntergefahren worden, dass er in die Schaumisolierung 12 des Kunststoffmantelrohrs 10 eingreift. Da der Fräser 41 betätigt ist und zugleich sich das Kunststoffmantelrohr 10 auf den Rollenböcken 36 um seine Längsachse 14 senkrecht zur Bildebene dreht, trägt der Fräser 41 sowohl das Kunststoff-Außenrohr als auch die Schaumisolierung 12 stückweise ab. Dabei ist vorsorglich sichergestellt, dass der Fräser 41 nicht das Stahlrohr 11 des Kunststoffmantelrohrs 10 beschädigt.

Nachdem der Fräser 41 die Schaumisolierung 12 und das Kunststoffaußenrohr 13 entsprechend abgetragen hat, und zwar nach zumindest einer Drehung des Kunststoffmantelrohrs 10 um seine Längsachse 14 auch rundum, kann er wieder aus der Bearbeitungsstellung heraus nach oben verfahren werden, wie man es in Figur 2 sieht. Es kann jetzt das zweite materialabtragende Werkzeug, nämlich die rotierende Bürste 42, nach unten in Position gefahren werden, um die noch stehengebliebenen Reste der Schaumisolierung 12 auf dem Stahlrohr 11 zu entfernen, wie dies auch dargestellt ist. Auch hierbei rotiert das Kunststoffmantelrohr 10 um seine Längsachse 14 auf den Rollenböcken 36.

Ist nun nur noch das Stahlrohr 11 in diesem Bereich der Längserstreckung des Kunststoffmantelrohrs 10 übrig, so ergibt sich die Situation aus der **Figur 4**.

Man sieht hier die Rollenböcke 36, die auf Schienen 31 der Schieneneinrichtung 30 verfahrbar sind. Sie sind allerdings in der dargestellten Situation arretiert, nachdem sie ihre Zielposition schon erreicht haben. Stattdessen bewegen sich sind Rollen der Rollenböcke 36 rotierend um eine Achse, die parallel zur Längsachse 14 des auf den Rollenböcken 36 liegenden Transportrohrs 10 verläuft, und drehen so auch das Transportrohr 10 um seine eigene Längsachse 14.

Während des Rotierens ist jetzt eine Stahlrohrtrenneinrichtung 45 aktiv, die durch die Bearbeitungseinheit 40 oder eine andere Bearbeitungseinheit ebenfalls auf den Schienen 31 der Schieneneinrichtung 30 bereits in die gewünschte Position verfahren worden ist.
Diese Stahlrohrtrenneinrichtung 45, etwa ein Plasmabrenner, ist ebenfalls angedeutet. Dieser Plasmabrenner der Stahlrohrtrenneinrichtung 45 trennt nun das Stahlrohr 11 und bringt dabei zugleich eine Fase in das Stahlrohr ein, um eine spätere Verschweißung mit einem anderen Gegenstück zu erleichtern.

### Bezugszeichenliste

- 10: Kunststoffmantelrohr
- 11: inneres Stahlrohr
- 12: Schaumisolierung
- 13: Kunststoff-Außenrohr
- 14: Längsachse

- 20: Unterstützungsvorrichtung
- 21: Unterbau
- 22: Unterbau
- 23: Unterbau
- 24: Unterbau

- 30: Schieneneinrichtung
- 31: Schiene
- 34: Längsrichtung der Schiene
- 36: Rollenbock

- 40: Bearbeitungseinheit
- 41: materialabtragendes Werkzeug
- 42: materialabtragendes Werkzeug
- 45: Stahlrohr/Trenneinrichtung

## Patentansprüche

1. Vorrichtung zum Schneiden eines Kunststoffmantelrohrs (10), welches ein inneres Stahlrohr (11), eine das Stahlrohr umgebende Schaumisolierung (12) und ein die Schaumisolierung umgebendes Kunststoff-Außenrohr (13) aufweist,
wobei eine Unterstützungsvorrichtung (20) vorgesehen ist,
wobei auf der Oberseite der Unterstützungsvorrichtung (20) eine Schieneneinrichtung (30) mit Schienen (31) in einer Längsrichtung (34) vorgesehen ist, die zur Aufnahme eines zu schneidenden Kunststoffmantelrohrs (10) mit seiner Längsachse (14) in der Längsrichtung (34) der Schienen ausgebildet ist,
wobei mehrere Rollenböcke (36) an der Schieneneinrichtung (30) vorgesehen sind,
wobei eine Bearbeitungseinheit (40) vorgesehen ist, welche auf der Schieneneinrichtung (30) in Längsrichtung (34) verfahrbar ist, wobei die Bearbeitungseinheit (40) mit einer Stahlrohrtrennvorrichtung (45) ausgestattet ist, **dadurch gekennzeichnet, dass** die mehreren Rollenböcke (36) angetrieben sind und so angeordnet sind, dass sie ein auf der Schieneneinrichtung (30) aufgenommenes Kunststoffmantelrohr (10) um seine Längsachse (14) drehen können,
dass die gleiche oder eine weitere in Längsrichtung (34) auf der Schieneneinrichtung (30) verfahrbare Bearbeitungseinheit (40) mit einem materialabtragenden Werkzeug (41) ausgestattet ist, und dass die mit dem materialabtragenden Werkzeug ausgestattete Bearbeitungseinheit (40) für eine materialabtragende Bearbeitung des Kunststoffmantelrohrs (10) senkrecht zur Längsrichtung (34) ausgebildet ist.

2. Vorrichtung nach Anspruch 1,
**dadurch gekennzeichnet,**
**dass** die Rollenböcke (36) auf Schienen (31) der Schieneneinrichtung (30) in Längsrichtung (34) verfahrbar sind.

3. Vorrichtung nach Anspruch 1 oder 2,
**dadurch gekennzeichnet,**
**dass** Festhaltemittel für das Kunststoffmantelrohr (10) auf der Schieneneinrichtung (30) vorgesehen sind.

4. Vorrichtung nach Anspruch 3,
**dadurch gekennzeichnet,**
**dass** die Festhaltemittel eine Abhebesicherung aufweisen, insbesondere eine Rollenkette, die auf beiden Seiten des Kunststoffmantelrohrs an der Bearbeitungseinheit (40) oder im Bereich der Schieneneinrichtung (30) befestigt ist.

5. Vorrichtung nach einem der vorstehenden Ansprüche,
**dadurch gekennzeichnet,**
**dass** die Bearbeitungseinheiten (40) mit Spanabsaugungseinrichtungen versehen sind.

6. Vorrichtung nach einem der vorstehenden Ansprüche,
**dadurch gekennzeichnet,**
**dass** zumindest eines der materialabtragenden Werkzeuge (41) ein Fräser ist.

7. Vorrichtung nach einem der vorstehenden Ansprüche,
**dadurch gekennzeichnet,**
**dass** zumindest eines der materialabtragenden Werkzeuge (42) eine rotierende Bürste ist.

8. Vorrichtung nach einem der vorstehenden Ansprüche,
**dadurch gekennzeichnet,**
**dass** die Stahlrohrtrennvorrichtung (45) zwei Plasmabrenner aufweist, welche vorzugsweise einen Winkel zur Erzeugung einer Fase in dem Schnitt des Stahlrohrs (11) bilden.

9. Vorrichtung nach einem der vorstehenden Ansprüche,
**dadurch gekennzeichnet,**
**dass** die Unterstützungsvorrichtung (20) aus vier separat transportablen, überwiegend gleichartigen Unterbauten (21, 22, 23, 24) aufgebaut ist.

10. Vorrichtung nach einem der vorstehenden Ansprüche,
**dadurch gekennzeichnet,**
**dass** die oder eine der Bearbeitungseinheiten (40) mit einem überdachten Bedienplatz ausgestattet ist.

11. Verfahren zum Schneiden eines Kunststoffmantelrohrs (10), welches ein inneres Stahlrohr (11), eine das Stahlrohr umgebende Schaumisolierung (12) und ein die Schaumisolierung umgebendes Kunststoff-Außenrohr (13) aufweist,
**dadurch gekennzeichnet,**
**dass** das zu schneidende Kunststoffmantelrohr auf eine Schieneneinrichtung (30) mit Schienen (31) in einer Längsrichtung (34) auf der Oberseite einer Unterstützungsvorrichtung (20) gelegt wird, die der Längsachse (14) des zu schneidenden Kunststoffmantelrohrs (10) entspricht,
**dass** mittels mehrerer angetriebener Rollenböcke (36) an der Schieneneinrichtung (30) das auf der Schieneneinrichtung (30) aufgenommenes Kunststoffmantelrohr (10) um seine Längsachse (14) gedreht wird, dass eine Bearbeitungseinheit (40) mit einem materialabtragenden Werkzeug (41) auf der Schieneneinrichtung (30) in Längsrichtung (34) in eine Bearbeitungsposition verfahren wird,
**dass** die Bearbeitungseinheit (40) eine materialabtragende Bearbeitung des Kunststoffmantelrohrs (10) senkrecht zur Längsrichtung (34) vornimmt und das Kunststoff-Außenrohr (13) und die Schaumisolierung (12) entfernt, und
**dass** die gleiche oder eine weitere in Längsrichtung (34) auf der Schieneneinrichtung (30) verfahrbare Bearbeitungseinrichtung (40) mit einer Stahlrohrtrennvorrichtung (45) in die Bearbeitungsposition verfahren wird und das innere Stahlrohr (11) trennt.

12. Verfahren nach Anspruch 11,
**dadurch gekennzeichnet,**
**dass** bei der materialabtragenden Bearbeitung durchschnittene Meldeadern durch vorkonfektionierte Adern im Baustellenverbindungsbereich ersetzt werden, wenn die Innenrohrschweißarbeiten beendet sind.

## Claims

1. Device for cutting a plastics-sheathed pipe (10) which comprises an inner steel pipe (11), a foam insulation (12) enclosing the steel pipe and a plastics outer pipe (13) enclosing the foam insulation,
wherein a supporting device (20) is provided,
wherein provided on the upper side of the supporting device (20) is a rail apparatus (30) with rails (31) in a longitudinal direction (34), which is configured for receiving a plastics-sheathed pipe (10) that is to be cut, with its longitudinal axis (14) in the longitudinal direction (34) of the rails,
wherein a plurality of roller stands (36) are provided on the rail apparatus (30),
wherein a machining unit (40) is provided which is movable in the longitudinal direction (34) on the rail apparatus (30),
wherein the machining unit (40) is equipped with a steel pipe separating device (45), **characterised in that** the plurality of roller stands (36) are driven and are arranged so that they can rotate a plastics-sheathed pipe (10) received on the rail apparatus (30) about the longitudinal axis (14) of said pipe,
**in that** the same or a further machining unit (40) which is movable in the longitudinal direction (34) on the rail apparatus (30) is equipped with a material-removing tool (41), and **in that** the machining unit (40) equipped with the material-removing tool is configured for a material-removing machining of the plastics-sheathed pipe (10) perpendicularly to the longitudinal direction (34).

2. Device according to claim 1,
**characterised in that** the roller stands (36) are movable in the longitudinal direction (34) on rails (31) of the rail apparatus (30).

3. Device according to claim 1 or 2,
**characterised in that** retaining means for the plastics-sheathed pipe (10) are provided on the rail apparatus (30).

4. Device according to claim 3,
**characterised in that** the retaining means have a lift-off prevention, in particular a roller chain which is fastened on both sides of the plastics-sheathed pipe on the machining unit (40) or in the region of the rail apparatus (30).

5. Device according to one of the preceding claims,
**characterised in that** the machining units (40) are provided with cuttings clearing suction apparatuses.

6. Device according to one of the preceding claims,
**characterised in that** at least one of the material-removing tools (41) is a milling cutter.

7. Device according to one of the preceding claims,
**characterised in that** at least one of the material-removing tools (42) is a rotating brush.

8. Device according to one of the preceding claims,
**characterised in that** the steel pipe separating device (45) has two plasma torches which preferably form an angle for creating a chamfer in the cut of the steep pipe (11).

9. Device according to one of the preceding claims,
**characterised in that** the supporting device (20) is constructed from four separately transportable largely similar substructures (21, 22, 23, 24).

10. Device according to one of the preceding claims,
**characterised in that** the, or one of the, machining units (40) is equipped with a roof-covered operating station.

11. Method for cutting a plastics-sheathed pipe (10) which comprises an inner steep pipe (11), a foam insulation (12) enclosing the steel pipe and a plastics outer pipe (13) enclosing the foam insulation,
**characterised in that** the plastics-sheathed pipe that is to be cut is laid on a rail apparatus (30) with rails (31) in a longitudinal direction (34) on the upper side of a supporting device (20) which corresponds to the longitudinal axis (14) of the plastics-sheathed pipe (10) that is to be cut,
**in that** the plastics-sheathed pipe (10) received on the rail apparatus (30) is rotated about its longitudinal axis (14) by means of a plurality of driven roller stands (36) on the rail apparatus (30),
**in that** a machining unit (40) with a material-removing tool (41) is moved on the rail apparatus (30) in the longitudinal direction (34) into a machining position,
**in that** the machining unit (40) undertakes a material-removing machining of the plastics-sheathed pipe (10) perpendicularly to the longitudinal direction (34) and removes the plastics outer pipe (13) and the foam insulation (12), and
**in that** the same or a further machining apparatus (40) with a steel pipe cutting device (45) which is movable in the longitudinal direction (34) on the rail apparatus (30) is moved into the machining position and separates the inner steel pipe (11).

12. Method according to claim 11,
**characterised in that** signalling lines cut through during the material-removing machining are replaced in the building site connection area with pre-fabricated lines when the inner pipe welding operations are complete.

## Revendications

1. Dispositif servant à découper un tuyau à gaine en plastique (10), qui présente un tuyau en acier (11) intérieur, une isolation en mousse (12) entourant le tuyau en acier et un tuyau extérieur en plastique (13) entourant l'isolation en mousse,
dans lequel un dispositif de soutien (20) est prévu,
dans lequel est prévu, sur le côté supérieur du dispositif de soutien (20), un système à rails (30) doté de rails (31) dans une direction longitudinale (34), lequel est réalisé afin de recevoir un tuyau à gaine en plastique (10) à découper avec son axe longitudinal (14) dans la direction longitudinale (34) des rails,
dans lequel plusieurs blocs de roulettes (36) sont prévus au niveau du système à rails (30),
dans lequel est prévue une unité d'usinage (40), qui peut être déplacée sur le système à rails (30) dans la direction longitudinale (34),
dans lequel l'unité d'usinage (40) est équipée d'un dispositif de séparation de tuyau en acier (45), **caractérisé en ce que** les nombreux blocs de roulettes (36) sont entraînés et sont disposés de telle sorte qu'ils peuvent tourner un tuyau à gaine en plastique (10) reçu sur le système à rails (30) autour de son axe longitudinal (14),
**en ce que** la même unité d'usinage (40) ou une autre unité d'usinage pouvant être déplacée dans la direction longitudinale (34) sur le système à rails (30) est équipée d'un outil (41) à enlèvement de matériau, et **en ce que** l'unité d'usinage (40) équipée de l'outil à enlèvement de matériau est réalisée en vue d'un usinage par enlèvement de matériau du tuyau à gaine en plastique (10) de manière perpendiculaire par rapport à la direction longitudinale (34).

2. Dispositif selon la revendication 1,
**caractérisé en ce**
**que** les blocs de roulettes (36) peuvent être déplacés sur des rails (31) du système à rails (30) dans la direction longitudinale (34).

3. Dispositif selon la revendication 1 ou 2,
**caractérisé en ce**
**que** sont prévus des moyens d'immobilisation pour le tuyau à gaine en plastique (10) sur le système à rails (30).

4. Dispositif selon la revendication 3,
**caractérisé en ce**
**que** les moyens d'immobilisation présentent une sécurité anti-soulèvement, en particulier une chaîne de roulettes, qui est fixée sur les deux côtés du tuyau à gaine en plastique au niveau de l'unité d'usinage (40) ou dans la zone du système à rails (30).

5. Dispositif selon l'une quelconque des revendications précédentes,
**caractérisé en ce**
**que** les unités d'usinage (40) sont pourvues de systèmes d'enlèvement de copeaux par aspiration.

6. Dispositif selon l'une quelconque des revendications précédentes,
**caractérisé en ce**
**qu'**au moins un des outils (41) à enlèvement de matériau est une fraise.

7. Dispositif selon l'une quelconque des revendications précédentes,
**caractérisé en ce**
**qu'**au moins un des outils (42) à enlèvement de matériau est une brosse rotative.

8. Dispositif selon l'une quelconque des revendications précédentes,
**caractérisé en ce**
**que** le dispositif de séparation de tuyau en acier (45) présente deux chalumeaux à plasma, qui forment de préférence un angle donné afin de produire un chanfrein dans la découpe du tuyau en acier (11).

9. Dispositif selon l'une quelconque des revendications précédentes,
**caractérisé en ce**
**que** le dispositif de soutien (20) présente une structure composée de quatre sous-ensembles (21, 22, 23, 24) transportables séparément, majoritairement identiques.

10. Dispositif selon l'une quelconque des revendications précédentes,
**caractérisé en ce**
**que** l'unité ou l'une des unités d'usinage (40) est équipée ou sont équipées d'un emplacement d'utilisation couvert.

11. Procédé servant à découper un tuyau à gaine en plastique (10), qui présente un tuyau en acier (11) intérieur, une isolation en mousse (12) entourant le tuyau en acier et un tuyau extérieur en plastique (13) entourant l'isolation en mousse,
**caractérisé en ce**
**que** le tuyau à gaine en plastique à découper est placé sur un système à rails (30) doté de rails (31), dans une direction longitudinale (34), sur le côté supérieur d'un dispositif de soutien (20), qui correspond à l'axe longitudinal (14) du tuyau à gaine en plastique (10) à découper,
**que** le tuyau à gaine en plastique (10) reçu sur le système à rails (30) est tourné autour de son axe longitudinal (14) au moyen de plusieurs blocs de roulettes (36) entraînés au niveau du système à rails (30),
**qu'**une unité d'usinage (40) dotée d'un outil (41) à enlèvement de matériau est déplacée sur le système à rails (30) dans la direction longitudinale (34) dans une position d'usinage,
**que** l'unité d'usinage (40) procède à un usinage par enlèvement de matériau du tuyau à gaine en plastique (10) de manière perpendiculaire par rapport à la direction longitudinale (34) et retire le tuyau extérieur en plastique (13) et l'isolation en mousse (12), et
**que** le même ou un autre système d'usinage (40) pouvant être déplacé dans la direction longitudinale (34) sur le système à rails (30), doté d'un dispositif de séparation de tuyau en acier (45) est déplacé dans la position d'usinage et sépare le tuyau en acier (11) intérieur.

12. Procédé selon la revendication 11,
**caractérisé en ce**
**que** lors de l'usinage par enlèvement de matériau, des brins signalés sectionnés sont remplacés par des brins préfabriqués dans la zone d'assemblage de construction quand les travaux de soudage de tuyau intérieur sont terminés.
